# EUROPÄISCHE PATENTSCHRIFT

(11) **EP 0 518 143 B1**
(45) Veröffentlichungstag und Bekanntmachung des Hinweises auf die Patenterteilung: **02.11.1995**
(21) Anmeldenummer: 92109143.5
(22) Anmeldetag: 30.05.1992
(51) Int. Cl.: F16C 32/06

(54) **Einrichtung zur Übertragung eines hydraulischen Drucks von einem feststehenden Aussenteil auf eine drehbare Welle**
Device for transmission of a hydraulic pressure from a stationary outer piece to a rotating shaft
Dispositif pour la transmission d'une pression hydraulique d'une partie extérieure stationnaire à un arbre rotatif

(30) Priorität: 13.06.1991 DE 4119465
(43) Veröffentlichungstag der Anmeldung: 16.12.1992
(73) Patentinhaber: Leidenfrost, Reinhold Dipl.-Ing., D-92353 Postbauer-Heng (DE)
(72) Erfinder: Leidenfrost, Reinhold Dipl.-Ing., D-92353 Postbauer-Heng (DE)
(74) Vertreter: Klug, Horst, Dipl.-Ing. (FH)

(56) Entgegenhaltungen:
- AT-B- 387 265
- DD-A- 222 670
- DE-A- 3 325 880
- DE-C- 2 225 360
- JP-A- 6 237 516
- JP-A-59 103 021

## Beschreibung

Die Erfindung betrifft eine Einrichtung zur Übertragung eines hydraulischen Drucks von einem feststehenden Außenteil auf eine drehbare Welle, wobei zwischen zwei im Außenteil axial hintereinander angeordneten hydrostatischen Lagern mit über den Umfang verteilten Drucktaschen, die mit einem hydraulischen Druckmedium beaufschlagt sind, ein Ringkanal angeordnet ist, der radial zu dem Umfangsspalt zwischen Welle und Außenteil hin offen ist und der über Lecköldrosselspalte mit den Drucktaschen verbunden ist, und wobei im Bereich dieses Ringkanals in der Welle eine Einführbohrung für das Druckmedium vorgesehen ist und in den Ringkanal eine in die freie Atmosphäre oder eine Leckölrückführung führende Leitung mündet, die absperrbar ist, und wobei das Außenteil aus einem inneren Ring besteht, der in seiner Bohrung die Drucktaschen aufweist, von denen radiale Bohrungen nach außen führen.

Eine solche, aus der DE-C-33 25 880 bekannte Einrichtung muß in der Praxis bei unterschiedlichsten Bedingungen eingesetzt werden können, wie z.B. unterschiedlichen Viskositäten und Drücken des Druckmediums, unterschiedlichen Drehzahlen der Welle und dergleichen. Um diesen Bedingungen gerecht zu werden, ist es erforderlich, in die Leitungen zur Zuführung des Druckmediums in die Drucktaschen je nach den vorliegenden Gegebenheiten unterschiedliche kapillare Drosseln einzusetzen. Da derartige Einrichtungen möglichst universell einsetzbar sein sollen, muß diese Notwendigkeit als nachteilig angesehen werden.

Der Erfindung liegt die Aufgabe zugrunde, mit einer einfachen konstruktiven Maßnahme die bekannte Einrichtung so zu verändern, daß sich mit ihr leicht kapillare Drosseln mit unterschiedlichen Drosselwirkungen einstellen lassen.

Diese Aufgabe löst die Erfindung dadurch, daß das Außenteil zusätzlich aus einer äußeren Hülse besteht, die dicht auf dem Ring aufsitzt und eine Zuführbohrung für das hydraulische Druckmedium aufweist, wobei wenigstens in der einen der einander zugewandten Zylinderflächen des Ringes und der Hülse zur Bildung von kapillaren Drosseln Ausnehmungen geringen Querschnitts vorgesehen sind, die einerseits mit den Zuführbohrungen der Hülse und andrerseits mit den radialen Bohrungen des Ringes in Verbindung stehen. Die Ausnehmungen geringen Querschnitts können z.B. in einfacher Weise durch Einfräsungen gebildet sein, die man im Querschnitt nahezu beliebig klein ausführen kann.

Es können beispielsweise in einer der sich gegenüberliegenden Zylinderflächen der beiden das Außenteil bildenden Bauteile (Ring und Hülse) in Umfangsrichtung verlaufende Rillen geringen Querschnitts vorgesehen werden, die sich mit axial verlaufenden Nuten in der anderen Zylinderfläche kreuzen. Dabei kann man die Lage der axialen Nuten zu der der Rillen so wählen, daß sich von Fall zu Fall unterschiedliche wirksame Längen der Rillen, die die eigentlichen kapillaren Drosseln bilden, ergeben. Man hat es somit in der Hand, die Drosselwirkung in einfacher Weise den vorliegenden Gegebenheiten anzupassen.

Bei einer speziellen Ausbildung erstrecken sich in der äußeren Zylinderfläche des Ringes über annähernd den Umfangsbereich je einer Drucktasche Rillen geringen Querschnitts, die an ihren Enden durch radiale Bohrungen mit den Drucktaschen verbunden sind, und in der Bohrung der Hülse ist eine mittlere Umfangsnut vorgesehen, in die eine Zuführbohrung mündet und die mit axialen Nuten in Verbindung steht, welche die Rillen kreuzen.

Es ist aber auch die Umkehrung realisierbar, bei der in der Bohrung der Hülse eine mittlere Umfangsnut vorgesehen ist, in die eine Zuführ-bohrung mündet und die mit axialen Nuten in Verbindung steht, von welchen in einer Umfangsrichtung Rillen geringen Querschnitts ausgehen, die sich über einen Umfangsbereich erstrecken, der annähernd der Erstreckung einer Drucktasche entspricht, und daß in dem Ring radiale Bohrungen vorgesehen sind, die in die Drucktaschen münden und die andrerseits in Verbindung mit den Rillen der Hülse stehen.

Bei einer anderen Variante der Erfindung sind in einer der sich gegenüberliegenden Zylinderflächen der beiden das Außenteil bildenden Bauteile (Ring und Hülse) in Umfangsrichtung verlaufende Rillen geringen Querschnitts vorgesehen, die von axialen Nuten gekreuzt sind, die im selben Bauteil angeordnet sind. Unterschiedliche Drosselwirkungen können in diesem Falle dadurch erzielt werden, daß die die Rillen kreuzenden Nuten an der gewünschten Stelle der Rillen nachträglich eingefräst werden.

Während bei den bisher beschriebenen Konstruktionen die Änderung der Drosselwirkung ausschließlich durch Änderung der wirksamen Länge der die Drosseln bildenden Rillen erfolgte, besteht im Rahmen der Erfindung auch die Möglichkeit, den Drosselquerschnitt mit heranzuziehen. Die Zu- bzw. Abführung des Druckmediums in die Rillen bzw. aus den Rillen geringen Querschnitts erfolgt an deren einen Enden. Wenn man nun die Rillen selbst so ausbildet, daß sich ihr Querschnitt von diesem Ende ausgehend kontinuierlich verringert, so wird dadurch erreicht, daß sich mit zunehmender Entfernung der die Rillen kreuzenden Nut von diesem Ende die Drosselwirkung nicht nur wegen der zunehmenden Länge der Drossel, sondern zusätzlich wegen deren Querschnittsverminderung ansteigt.

Eine weitere Ausführung dieser Art sieht vor, daß in der äußeren Zylinderfläche des Ringes Rillen, deren Querschnitt sich vom einen Ende ausgehend kontinuierlich verringert, unter einem Winkel gegenüber der Längsachse angeordnet sind, und daß in der Bohrung der Hülse gleichartige Rillen mit entgegengesetzter Neigung vorgesehen sind.

Im Rahmen der Erfindung ist es zweckmäßig, daß Ring und Hülse unter Vorspannung flüssigkeitsdicht aufeinander sitzen, wodurch z.B. zusätzliche Dichtungsmittel völlig vermieden werden.

Die Querschnittsform der Rillen ist für die angestrebte Wirkung ohne Bedeutung. In vielen Fällen wird sich ein Dreiecksprofil anbieten. Es sind aber z.B. ohne weiteres auch halbkreisförmige oder rechteckige Profile anwendbar.

In den Zeichnungen sind Ausführungsbeispiele der Erfindung dargestellt. Es zeigen:
Fig. 1 einen Längsschnitt durch eine erfindungsgemäße Einrichtung,
Fig. 2 einen Querschnitt nach Linie II-II der Fig. 1,
Fig. 3 einen Längsschnitt nach Linie III-III der Fig. 4,
Fig. 4 einen Querschnitt nach Linie IV-IV der Fig 3,
Fig. 5 einen Längsschnitt durch eine Variante der Fig. 1 oder 3,
Fig. 6 eine Draufsicht auf eine Abwicklung des Ringes nach Linie VI-VI der Fig. 5,
Fig. 7 einen Querschnitt durch eine weitere Variante und
Fig. 8 eine Draufsicht auf eine teilweise Abwicklung des Ringes einer weiteren Variante.

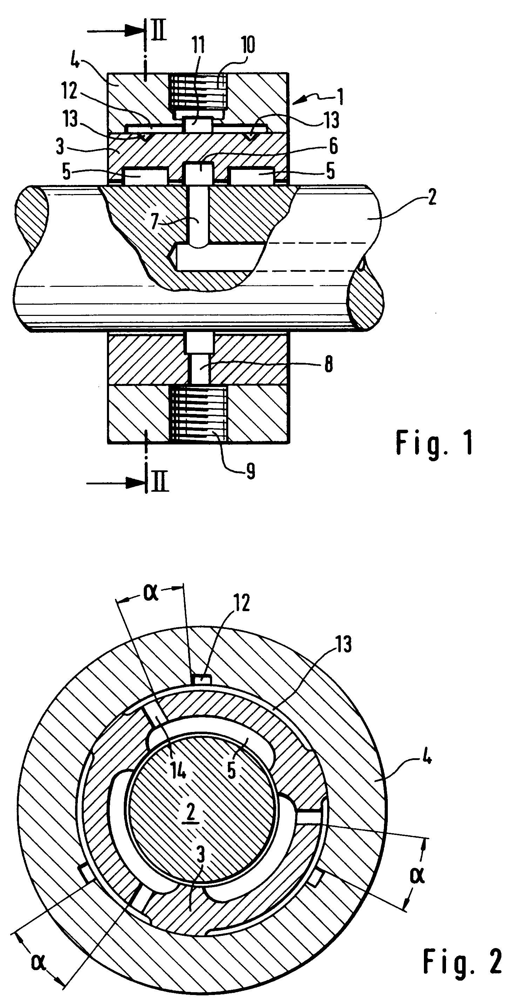

Die in den Fig. 1 und 2 dargestellte Einrichtung besteht aus dem Außenteil 1, welches in einer Bohrung die Welle 2 aufnimmt. Das Außenteil 1 seinerseits ist zusammengesetzt aus zwei konzentrisch ineinander angeordneten Teilen, nämlich dem inneren Ring 3 und der äußeren Hülse 4. Der innere Ring 3 weist in seiner Bohrung zwei axial hintereinander angeordnete hydrostatische Lager mit über den Umfang verteilten Drucktaschen 5 auf. Zwischen den beiden hydrostatischen Lagern ist in der Bohrung des Ringes 3 ein Ringkanal 6 vorgesehen, der zur Welle 2 hin offen ist und in dessen Bereich in der Welle eine Einführbohrung 7 angebracht ist. Der Ringkanal 6 ist über die Bohrung 8 und den diese überdeckenden Gewindeanschluß 9 mit der freien Atmosphäre verbunden. Für die Funktion der Einrichtung ist es erforderlich, daß dieser Anschluß durch ein Ventil abgesperrt werden kann.

Der Einrichtung wird durch die Gewindebohrung 10 Drucköl zugeführt, das von dort aus in die Umfangsnut 11 gelangt, von der axiale Nuten 12 ausgehen. in der äußeren Zylinderfläche des Ringes 3 sind Rillen 13 von geringem Querschnitt vorgesehen, die sich annähernd über den Umfangsbereich je einer Drucktasche 5 erstrecken, und die an ihren einen Enden durch radiale Bohrungen 14 mit den Drucktaschen verbunden sind. Durch die wirksame Länge der Rillen 13, die in Fig. 2 mit dem Winkel α bezeichnet ist, wird die für die Funktion der Einrichtung erforderliche Drosselwirkung erzielt. es ist aus den Zeichnungen leicht zu entnehmen, daß diese wirksame Länge variiert werden kann, wenn die Hülse 4 eine andere Winkelstellung gegenüber dem Ring 3 einnimmt.

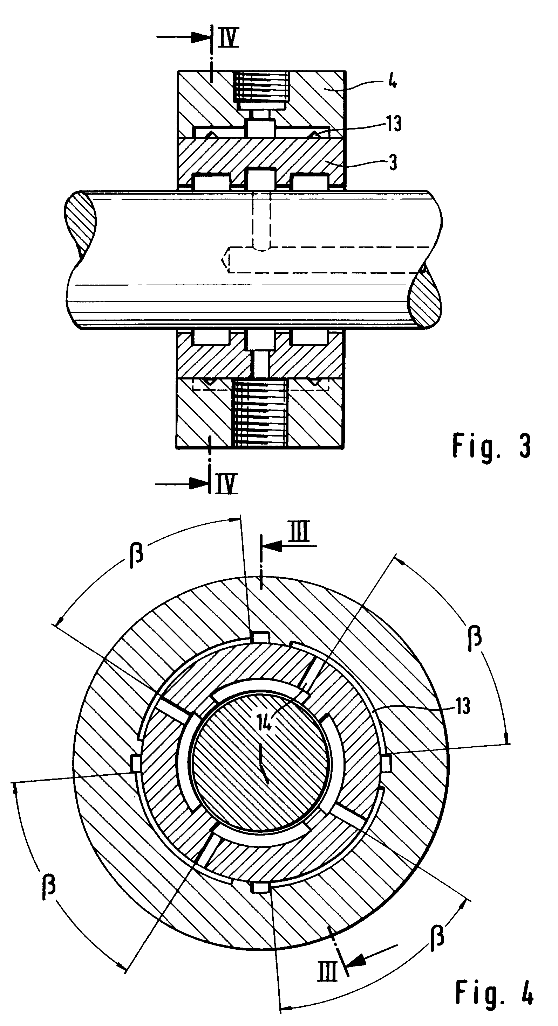

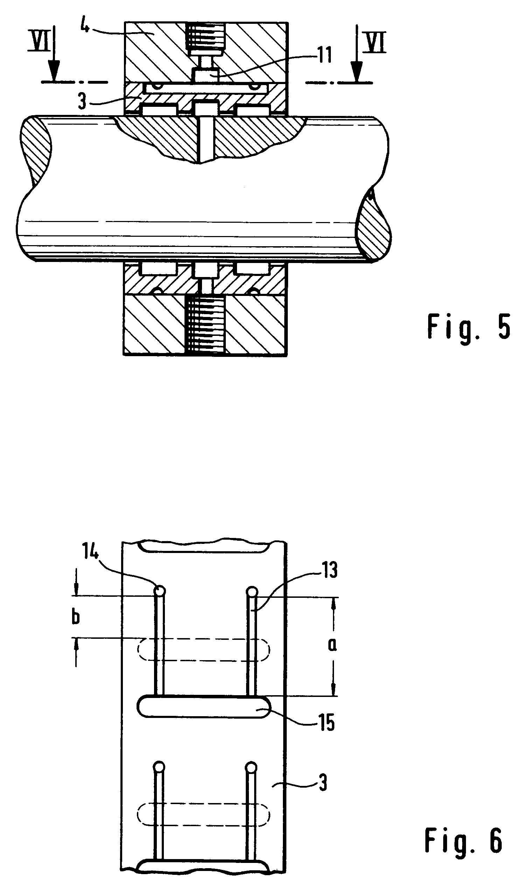

Die in den Fig 3 und 4 dargestellte Variante unterscheidet sich von der nach den Fig. 1 und 2 im wesentlichen nur dadurch, daß hier die Rillen 13 nicht in der äußeren Zylinderfläche des Ringes 3, sondern in der Bohrung der Hülse 4 angeordnet sind. Die im inneren Ring 3 angeordneten radialen Bohrungen 14 zur Zuführung des Druckmediums in die Drucktaschen 5 stehen in Verbindung mit den Rillen 13 in der äußeren Hülse 4. Hier wird durch die gegenseitige Winkelposition des inneren Ringes 3 zur Hülse 4 die wirksame Länge der Drosseln bestimmt, die in Fig. 4 mit dem Winkel β bezeichnet ist.

Bei der in den Fig. 5 und 6 dargestellten Ausführung ist in der Bohrung der Hülse 4 lediglich die Umfangsnut 11 vorgesehen. Wie insbesondere die Draufsicht der Abwicklung des Ringes 3 gemäß Fig. 6 zeigt, sind in der äußeren Zylinderfläche des Ringes 3 axiale Nuten 15 vorgesehen, von denen in Umfangsrichtung verlaufende Rillen 13 ausgehen, die an ihren anderen Enden in die radialen Bohrungen 14 münden. Dadurch ergibt sich eine wirksame Länge der Drossel, die in Fig. 6 mit a bezeichnet ist. Will man eine geringere Drosselwirkung erzielen, so können an den gestrichelt dargestellten Stellen axiale Nuten eingefräst werden, wodurch sich die wirksame Länge der Drossel verkürzt auf die mit b bezeichnete Strecke.

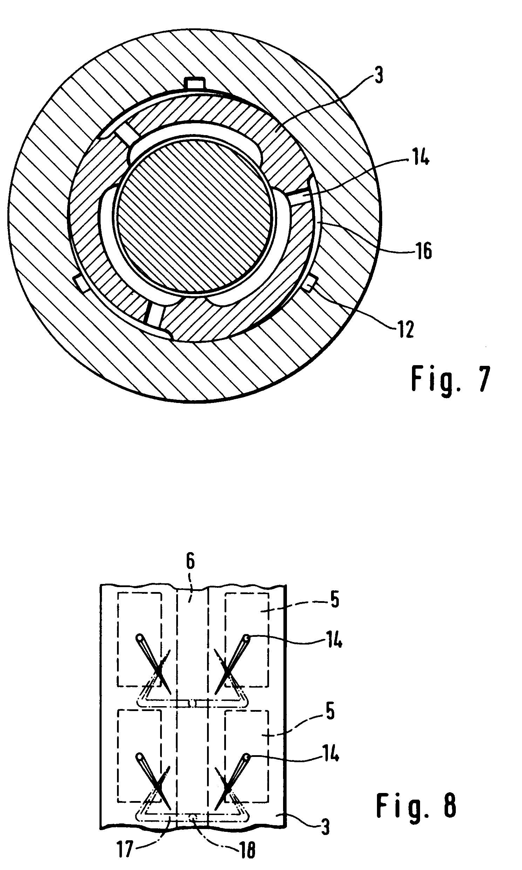

In Fig. 7 ist ein Querschnitt durch eine weitere Ausführung dargestellt, die sich von der Ausführung nach Fig. 2 dadurch unterscheidet, daß hier Rillen 16 in die äußere Zylinderfläche des Ringes 3 eingefräst sind, deren Querschnitt sich ausgehend von der radialen Bohrung 14 kontinuierlich verringert. Wenn man in diesem Falle die Hülse 4 gegenüber dem Ring 3 im Uhrzeigersinn verdreht, dann erhöht sich die Drosselwirkung nicht nur wegen der Zunahme der wirksamen Länge der Rillen 16, sondern noch zusätzlich noch wegen deren Querschnittsverringerung.

Fig. 8 schließlich zeigt eine Draufsicht auf eine Teilabwicklung des Ringes 3. Dabei sind mit gestrichelten Linien sowohl der Ringkanal 6, als auch die Drucktaschen 5 angedeutet. In die Drucktaschen münden die radialen Bohrungen 14, von denen unter einem Winkel gegenüber der (nicht dargestellten) Ringlängsachse Rillen ausgehen, deren Querschnitt sich von den Bohrungen 14 ausgehend kontinuierlich verringert. Mit strichpunktierten Linien sind die Rillen eingezeichnet, die in der Bohrung der Hülse 4 anzuordnen sind, die in gleicher Weise, jedoch mit entgegengesetzter Neigung ausgeführt sind, wie die Rillen im Ring 3. Mit dem Druckmedium versorgt werden die letzteren Rillen durch axiale Nuten 17, in welche durch Bohrungen 18 das Druckmedium eingespeist wird. Die Wirkung dieser Einrichtung erklärt sich selbst. Werden Ring 3 und Hülse 4 in der einen Richtung gegeneinander verdreht, dann erhöht sich die Drosselwirkung, während sie in der anderen Richtung abnimmt.

Der Deutlichkeit halber sind die Rillen 13 bzw. 16 in den Zeichnungen stark vergrößert dargestellt.

## Patentansprüche

1. Einrichtung zur Übertragung eines hydraulischen Drucks von einem feststehenden Außenteil (1) auf eine drehbare Welle (2), wobei zwischen zwei im Außenteil axial hintereinander angeordneten hydrostatischen Lagern mit über den Umfang verteilten Drucktaschen (5), die mit einem hydraulischen Druckmedium beaufschlagt sind, ein Ringkanal (6) angeordnet ist, der radial zu dem Umfangsspalt zwischen Welle (2) und Außenteil (1) hin offen ist und der über Lecköldrosselspalte mit den Drucktaschen (5) der hydrostatischen Lager verbunden ist, und wobei im Bereich dieses Ringkanals (6) in der Welle (2) eine Einführbohrung (7) für das Druckmedium vorgesehen ist und in den Ringkanal (6) eine in die freie Atmosphäre oder eine Leckölrückführung führende Leitung (8, 9) mündet, die absperrbar ist, wobei das Außenteil (1) aus einem inneren Ring (3) besteht, der in seiner Bohrung die Drucktaschen (5) aufweist, von denen radiale Bohrungen (14) nach außen führen, **dadurch gekennzeichnet**, daß das Außenteil (1) zusätzlich aus einer äußeren Hülse (4) besteht, die dicht auf dem Ring (3) aufsitzt und eine Zuführbohrung (10) für das hydraulische Druckmedium aufweist, wobei wenigstens in der einen der einander zugewandten Zylinderflächen des Ringes (3) und der Hülse (4) zur Bildung von kapillaren Drosseln Ausnehmungen (13) geringen Querschnitts vorgesehen sind, die einerseits mit der Zuführbohrung (10) der Hülse (4) und andrerseits mit den radialen Bohrungen (14) des Ringes (3) in Verbindung stehen.

2. Einrichtung nach Anspruch 1, **dadurch gekennzeichnet**, daß in einer der sich gegenüberliegenden Zylinderflächen der beiden das Außenteil (1) bildenden Bauteile (Ring (3) und Hülse(4)) in Umfangsrichtung verlaufende Rillen (13) geringen Querschnitts vorgesehen sind, die sich mit axial verlaufenden Nuten (12) in der anderen Zylinderfläche kreuzen.

3. Einrichtung nach Anspruch 1 oder 2, **dadurch gekennzeichnet**, daß in der äußeren Zylinderfläche des Ringes (3) sich über annähernd den Umfangsbereich je einer Drucktasche (5) Rillen (13) geringen Querschnitts erstrecken, die an ihren einen Enden durch radiale Bohrungen (14) mit den Drucktaschen (5) verbunden sind, und daß in der Bohrung der Hülse (4) eine mittlere Umfangsnut (11) vorgesehen ist, in die die Zuführbohrung (10) mündet und die mit axialen Nuten (12) in Verbindung steht, welche die Rillen (13) kreuzen.

4. Einrichtung nach Anspruch 1 oder 2, **dadurch gekennzeichnet**, daß in der Bohrung der Hülse (4) eine mittlere Umfangsnut (11) vorgesehen ist, in die die Zuführbohrung (10) mündet und die mit axialen Nuten (12) in Verbindung steht, von welchen in einer Umfangsrichtung Rillen (13) geringen Querschnitts ausgehen, die sich über einen Umfangsbereich erstrecken, der annähernd der Erstreckung einer Drucktasche (5) entspricht, und daß in dem Ring (3) radiale Bohrungen (14) vorgesehen sind, die in die Drucktaschen (5) münden und die andrerseits in Verbindung mit den Rillen (13) der Hülse (4) stehen.

5. Einrichtung nach Anspruch 1, 2 oder 3, **dadurch gekennzeichnet**, daß in einer der sich gegenüberliegenden Zylinderflächen der beiden das Außenteil (1) bildenden Bauteile (Ring (3) und Hülse(4)) in Umfangsrichtung verlaufende Rillen (13) geringen Querschnitts vorgesehen sind, die von axialen Nuten (15) gekreuzt sind, die im selben Bauteil angeordnet sind.

6. Einrichtung nach Anspruch 2, 3 oder 4, **dadurch gekennzeichnet**, daß die Zu- bzw. Abführung des Druckmediums in die Rillen (16) bzw. aus den Rillen (16) geringen Querschnitts an deren einen Enden erfolgt, und daß sich der Querschnitt der Rillen (16) von diesem Ende ausgehend kontinuierlich verringert.

7. Einrichtung nach Anspruch 6, **dadurch gekennzeichnet**, daß in der äußeren Zylinderfläche des Ringes Rillen, deren Querschnitt sich vom einen Ende ausgehend kontinuierlich verringert, unter einem Winkel gegenüber der Ringlängsachse angeordnet sind, und daß in der Bohrung der Hülse gleichartige Rillen mit entgegengesetzter Neigung vorgesehen sind.

8. Einrichtung nach einem der vorhergehenden Ansprüche, **dadurch gekennzeichnet**, daß Ring (3) und Hülse (4) unter Vorspannung flüssigkeitsdicht aufeinander sitzen.

## Claims

1. Device for transmission of a hydraulic pressure from a stationary outer piece (1) to a rotating shaft (2) wherein, between two hydrostatic bearings arranged axially behind one another in the outer piece and having circumferentially spaced pressure pockets (5) pressurized by a hydraulic pressure medium, an annular canal (6) is arranged which is open radially towards the circumferential gap between the shaft (2) and the outer piece (1) and connected via oil leakage throttling gaps with the pressure pockets (5) of the hydrostatic bearings, an inlet bore (7) for the pressure medium being provided in the shaft (2) in the region of said annular canal (6) while a closable duct (8, 9) leading to the free atmosphere or into an overflow oil return passage opens into the ring canal (6), and the outer piece (1) comprises an inner ring (3) in whose bore the pressure pockets (5) are arranged from which radial bores (14) lead to the outside, **characterized in that** the outer piece (1) additionally comprises an outer bush (4) which is mounted sealed on the ring (3) and provided with a feed bore (10) for the hydraulic medium, recesses (13) of small cross-section for forming capillary throttles being provided in at least one of the mutually facing cylindrical surfaces of the ring (3) and the bush (4), which recesses (13) are in communication on one side with the feed bore (10) of the bush (4) and on the other side with the radial bores (14) of the ring (3).

2. Device according to claim 1, **characterized in that** circumferentially extending channels (13) of small cross-section are provided in one of the mutually facing cylindrical surfaces of the two components (ring (3) and bush (4)) forming the outer piece (1), which channels (13) intersect axially extending grooves (12) in the other cylindrical surface.

3. Device according to claim 1 or 2, **characterized in that** channels (13) of small cross-section extend approximately over the circumferential region of each pressure pocket (5) in the outer cylindrical surface of the ring (3), said channels being connected at one of their ends via radial bores (14) with the pressure pockets (5), and in the bore of the bush (4) there is provided a central circumferential groove (11) in which the feed bore (10) opens and which is in communication with axial grooves (12) which intersect the channels (13).

4. Device according to claim 1 or 2, **characterized in that**, in the bore of the bush (4) there is provided a central circumferential groove (11) in which the feed bore (10) opens and which is in communication with axial grooves (12) from which channels (13) of small cross-section extend in one circumferential direction through a circumferential region corresponding approximately to the extent of a pressure pocket (5), and in the ring (3) there are provided radial bores (14) which open into the pressure pockets (5) and communicate on the other side with the channels (13) of the bush (4).

5. Device according to claim 1, 2 or 3, **characterized in that** circumferentially extending channels (13) of small cross-section are provided in one of the mutually facing cylindrical surfaces of the two components (ring (3) and bush (4)) forming the outer piece (1), which channels are intersected by axially extending grooves (15) provided in the same component.

6. Device according to claim 2, 3 or 4, **characterized in that** the feeding and discharge of the pressure medium into and out of the channels (16) of small cross-section is effected at one of their ends, and the cross-section of the channels (16) diminishes continuously starting from this end.

7. Device according to claim 6, **characterized in that**, in the outer cylindrical surface of the ring there are arranged at an angle to the longitudinal axis of the ring, channels whose cross-section diminishes continuously starting from one end, and oppositely inclined channels of a similar type are arranged in the bore of the bush.

8. Device according to one of the preceding claims, **characterized in that** the ring (3) and the bush (4) are mounted on each other sealed liquid-tight under pre-tension.

## Revendications

1. Dispositif pour la transmission d'une pression hydraulique d'une partie extérieure stationnaire (1) à un arbre rotatif (2), il étant prévu, entre deux paliers hydrostatiques agencés axialement l'un derrière l'autre dans la partie extérieure et ayant réparties sur la périphérie, des poches de presssions (5) sollicitées par un milieu hyraulique sous pression, un canal annulaire (6) qui est ouvert radialement vers l'intervalle périphérique entre l'arbre (2) et la partie extérieure (1) et qui est relié par des intervalles d'étranglement d'huile de fuite aux poches de pression (5) des paliers hydrostatiques, il étant prévu, en outre, dans la région de ce canal annulaire (6), dans l'arbre (2), un alésage d'entrée (7) du milieu hydraulique, un conduit (8, 9) qui peut être fermé et qui conduit à l'atmosphère libre ou dans un conduit de retour d'huile de fuite débouchant dans le canal annulaire (6), la partie extérieure (1) comprenant un anneau intérieur (3) qui, dans son alésage, comprend les poches de pression (5), à partir desquelles des alésages radiaux (14) conduisent à l'extérieur, **caractérisé en ce que** la partie extérieure (1) comprend, en plus, une douille extérieure (4) qui est rapportée de manière étanche sur l'anneau (3) et est munie d'un alésage d'amenée (10) du milieu hydraulique sous pression, il étant prévu dans au moins l'une des surfaces cylindriques opposées de l'anneau (3) et de la douille (4), des évidements (13) à section droite faible pour la formation d'étranglements capillaires qui communiquent de l'un côté avec l'alésage d'amenée (10) de la douille (4) et de l'autre côté avec les alésages radiaux (14) de l'anneau (3).

2. Dispositif selon la revendication 1, **caractérisé en ce que,** dans l'une des surfaces cylindriques opposées des deux composants (anneau (3) et douille (4)) constituant la partie extérieure (1) sont prévues des cannelures (13) à section droite faible qui s'étendent en direction périphérique et entrecroisent des rainures (12) qui s'étendent axialement dans l'autre surface cylindrique.

3. Dispositif selon la revendication 1 ou 2, **caractérisé en ce que,** dans la surface cylindrique extérieure de l'anneau (3), il s'étend, à peu près sur la région périphérique de chaque poche de pression (5), des cannelures (13) à section droite faible qui, à l'une de leurs extrémités, sont reliées par des alésages radiaux (14) aux poches de pression (5), et en ce que, dans l'alésage de la douille (4), il est prévu une rainure centrale périphérique (11) dans laquelle débouche l'alésage d'amenée (10) et qui communique avec des rainures axiales (12) qui entrecroisent les cannelures (13).

4. Dispositif selon la revendication 1 ou 2, **caractérisé en ce que,** dans l'alésage de la douille (4), il est prévu une rainure centrale périphérique (11) dans laquelle débouche l'alésage d'amenée (10) et qui communique avec des rainures axiales (12) à partir desquelles s'étendent, dans l'une des directions périphériques, des cannelures (13) à section droite faible qui s'étendent sur une région périphérique qui correspond approximativement à l'étendue d'une poche de pression (5), et en ce que, dans l'anneau (3) sont prévus des alésages radiaux (14) qui débouchent dans les poches de pression (5) et qui communiquent de l'autre côté avec les cannelures (13) de la douille (4).

5. Dispositif selon la revendication 1, 2 ou 3, **caractérisé en ce que,** dans l'une des surfaces cylindriques opposées des deux composants (anneau (3) et douille (4)) constituant la partie extérieure (1) sont prévues des cannelures (13) à section droite faible qui s'étendent en direction périphérique et qui sont entrecroisées par des rainures axiales (15) agencées dans le même composant.

6. Dispositif selon la revendication 2, 3 ou 4, **caractérisé en ce que,** l'amenée du milieu hydraulique dans les cannelures (16) à section droite faible ainsi que sa décharge à l'extérieur de celles-ci s'effectuent à l'une de leurs extrémités, et en ce que la section droite des cannelures (16) se réduit de manière continue à partir de cette extrémité.

7. Dispositif selon la revendication 6, **caractérisé en ce que,** dans la surface cylindrique extérieure de l'anneau sont agencées à un angle par rapport à l'axe longitudinal de l'anneau, des cannelures dont la section droite se réduit de manière continue à partir de l'une de leurs extrémités, et en ce que, dans l'alésage de la douille sont prévues des cannelures du même type à inclination opposée.

8. Dispositif selon l'une des revendications précédentes, **caractérisé en ce que** l'anneau (3) et la douille (4) sont montés de manière étanche aux liquides, l'un sur l'autre, sous précontrainte.
